# EUROPEAN PATENT APPLICATION

(11) **EP 4 746 083 A1**
(43) Date of publication of application: **20.05.2026**
(21) Application number: 24838518.9
(22) Date of filing: 14.06.2024
(51) Int. Cl.: H01M 8/0228, H01M 8/0258, H01M 8/18

(54) **BIPOLAR PLATE FOR FLOW BATTERY, AND FLOW BATTERY**

(30) Priority: 10.07.2023 CN 202310839232
(71) Applicant: VRB Energy Inc., Grand Cayman (KY)
(72) Inventor: WANG, Zhen, Beijing 101100 (CN); MA, Hedi, Beijing 101100 (CN); LIU, Huichao, Beijing 101100 (CN); GE, Qiming, Beijing 101100 (CN)
(74) Representative: Ricker, Mathias
(86) International application number: PCT/CN2024/099141
(87) International publication number: WO 2025/011260

(57) **Abstract**

The present disclosure provides a bipolar plate for a flow battery and a flow battery. The flow battery comprises a first carbon felt, a second carbon felt, and a bipolar plate, and the bipolar plate is located between the first carbon felt and the second carbon felt. Surfaces of the bipolar plate in contact with the first carbon felt and the second carbon felt are provided with grooves, and the grooves are filled with an adhesive. Fibers extending out of the grooves are provided in the grooves. The technical solution provided in the present invention forms fiber layers on the flocked surfaces of the bipolar plate. The fiber layers serve as contact surfaces with the carbon felts, and can significantly increase the friction therebetween. After 5,000 cycles of charge and discharge in a stack, the carbon felts did not slip or shift. The fiber layers can further reduce the contact resistance between the carbon felts and the bipolar plate by 30% or more, and improve the energy efficiency of the stack by 3% to 5%.

## Description

### RELATED APPLICATIONS

This application claims priority to Chinese Patent Application No. 202310839232.5, filed July 10, 2023, and titled BIPOLAR PLATE FOR FLOW BATTER AND FLOW BATTERY, which is incorporated herein by reference in its entirety.

### TECHNICAL FIELD

The present invention relates to, but is not limited to, the technical field of flow batteries, and in particular to, but is not limited to, a bipolar plate for a flow battery and a flow battery.

### BACKGROUND

Nowadays, as new clean energy gradually replaces traditional energy, energy storage systems, as an indispensable link of new clean energy systems, play a supporting role in the entire new power generation industry. Since new clean power generation energy (such as wind power, solar energy, etc.) is greatly affected by natural environmental factors, leading to difficulty in continuously outputting stable and safe electricity, it is crucial to use energy storage batteries as a linking part in new power generation energy. In the field of energy storage batteries, flow batteries are widely used in the energy storage industry because of their strong stability and safety, as well as their power carrying capacity, durability, and long-term discharge capability far exceeding other energy storage apparatuses (such as lithium batteries, pumped storage, and air compression energy storage).

A stack is a core component of the flow battery. A current mainstream stack structure includes an end plate, a liquid inlet plate, a current collector plate, a bipolar plate, an electrode, and an ion exchange membrane. Through compression and integration in a specific sequence, a battery reactor with a power storage effect is formed. The electrode is generally made of a carbon felt material, which is carbonized and activated to have high conductivity and high porosity, and is widely used in vanadium flow batteries.

However, in existing flow battery stacks, a mechanical contact method used between the bipolar plate and the carbon felt has defects, including at least:
1. In the case of electrolyte impact, the carbon felt is prone to slipping, resulting in dislocation, affecting the efficiency and safety of the stack.
2. The contact resistance between the bipolar plate and the carbon felt is large, which leads to severe polarization of the stack during charging and low energy efficiency.

### SUMMARY

The following is a summary of the subject matter described in detail in the present disclosure. This summary is not intended to limit the scope of the present disclosure.

The present disclosure uses a bipolar plate as a substrate, and constructs microporous channels on the substrate by, for example, laser etching in a vacuum environment, and then uses, for example, an electrostatic flocking technique to implant a carbon fiber precursor into the micropores, thereby forming a thin layer of carbon fiber on the surface of the bipolar plate. The thin layer may be made of the same fiber material as that of the carbon felt, and can greatly increase the friction between the carbon felt and the polar plate, thereby preventing the carbon felt from slipping and dislocating. In addition, the thin layer will further reduce the contact resistance therebetween and increase the energy efficiency of the stack.

The present disclosure provides a bipolar plate for a flow battery, the flow battery including a first carbon felt, a second carbon felt, and a bipolar plate, the bipolar plate being located between the first carbon felt and the second carbon felt;
surfaces of the bipolar plate in contact with the first carbon felt and the second carbon felt are provided with grooves, the grooves are filled with an adhesive, and fibers extending out of the grooves are provided in the grooves.

In some embodiments provided in the present disclosure, the width of the grooves is 1 µm to 100 µm.

In some embodiments provided in the present disclosure, the depth of the grooves is 10 µm to 100 µm.

In some embodiments provided in the present disclosure, the spacing between adjacent grooves on the surface of one side of the bipolar plate is 1 µm to 100 µm.

In some embodiments provided in the present disclosure, the diameter of the fibers is 1 µm to 100 µm, and the length of the fibers is 0.1 mm to 0.5 mm.

In some embodiments provided in the present disclosure, the fibers are implanted into the grooves to a depth of 1 µm to 100 µm.

In some embodiments provided in the present disclosure, the angle between the grooves and an electrolyte flow direction of the flow battery is within 30° to 90°;
the sizes of different grooves of the bipolar plate may be different, the sizes of different fibers may be different, the implantation depths of different fibers in the grooves may be different, the spacings of grooves on different bipolar plate surfaces may be different, and the spacings of adjacent grooves in different groups may be different.

In some embodiments provided in the present disclosure, the material of the fibers is independently selected from any one or more of a polyacrylonitrile (PAN)-based carbon fiber, an asphalt-based carbon fiber, a viscose-based carbon fiber, and/or a phenolic-based carbon fiber.

In some embodiments provided in the present disclosure, the weight of the fibers accounts for 1% to 5% of the weight of the untreated bipolar plate.

In some embodiments provided in the present disclosure, the adhesive is selected from any one or more of a polyurethane flocking adhesive and/or an acrylic flocking adhesive.

In some embodiments provided in the present disclosure, the flow battery is selected from any one or more of an all-vanadium flow battery, an iron-chromium flow battery, a zinc-iron flow battery, and/or a zinc-bromine flow battery.

In another aspect, the present disclosure provides a method for preparing the foregoing bipolar plate, the method including:
preparing the grooves on the surfaces of the bipolar plate in contact with the first carbon felt and the second carbon felt;
coating the adhesive on the surfaces of the bipolar plate where the grooves have been prepared;
removing the adhesive on the surfaces of the bipolar plate, while retaining the adhesive in the grooves;
implanting the fibers into the grooves before the adhesive is cured, to obtain the bipolar plate.

In some embodiments provided in the present disclosure, the preparation method includes:
cleaning the unetched bipolar plate surfaces and etching the cleaned bipolar plate;
dedusting and cleaning and drying the etched bipolar plate;
coating the adhesive on the surfaces of the bipolar plate where the grooves have been prepared;
removing the adhesive on the surfaces of the bipolar plate, while retaining the adhesive in the grooves;
performing electrostatic flocking on the bipolar plate before the adhesive is cured; and
cooling the electrostatically flocked bipolar plate to room temperature under vacuum conditions.

In some exemplary embodiments provided in the present disclosure, the preparation method further includes:
rolling the unwashed surfaces of the bipolar plate, and then placing the bipolar plate on an absolute flat surface to perform leveling and cleaning.

In some exemplary embodiments provided in the present disclosure, the preparation method further includes:
performing longitudinal etching on the front and back sides of the bipolar plate using laser light, to construct micro-grooves on the surfaces of the bipolar plate; vacuuming and dedusting an etched region of a pole piece during the laser etching process, to ensure that dust on the surface of the pole piece is qualified; and

Immersing the bipolar plate into anhydrous ethanol, and then taking the bipolar plate out and putting the bipolar plate into a vacuum drying oven to perform vacuum drying.

In some exemplary embodiments provided in the present disclosure, the preparation method further includes:
preheating the dried bipolar plate;
inserting the fibers into the grooves of the bipolar plate containing the adhesive by inertia through electrostatics in a flocking room to complete flocking; and

Placing the flocked bipolar plate in vacuum and naturally cooling the bipolar plate to room temperature.

In some embodiments provided in the present disclosure, the adhesive on the surfaces of the bipolar plate is removed using a scraper, and the adhesive in the grooves is retained.

In some embodiments provided in the present disclosure, the DC voltage of a flocking plate may be 20 KV to 100 KV, and the distance between the bipolar plate and the flocking plate may be 5 cm to 10 cm.

In some embodiments provided in the present disclosure, the bipolar plate may be immersed into anhydrous ethanol for cleaning, the immersion time in the anhydrous ethanol may be 10 minutes to 30 minutes, the vacuum drying temperature may be 130°C to 150°C, and the vacuum drying time may be 11 hours to 13 hours; a preheating temperature during flocking may be 180°C to 210°C; the temperature of the flocking room may be 490°C to 510°C.

In another aspect, the present disclosure further provides a flow battery, the flow battery including the foregoing bipolar plate;
the flow battery is selected from any one or more of an all-vanadium flow battery, an iron-chromium flow battery, a zinc-iron flow battery, and/or a zinc-bromine flow battery.

The beneficial effects of the present disclosure include:
The carbon fiber flock layers are formed on the surfaces of the bipolar plate after flocking. The carbon fiber layers serve as contact surfaces with the carbon felts, and can significantly increase the friction therebetween. After 5,000 cycles of charge and discharge in the stack, the carbon felt did not slip or shift.

The contact resistance between the carbon felts and the bipolar plate may be reduced by 30% or more, and the energy efficiency of the stack may be increased by 3% to 5%.

Other features and advantages of the present disclosure will be set forth in the following description, and will in part be apparent from the description, or may be learned by practicing the present disclosure. Other advantages of the present disclosure can be achieved and obtained through the solutions described in the description.

### BRIEF DESCRIPTION OF THE DRAWINGS

The accompanying drawings are used to provide an understanding of the technical solution of the present disclosure and constitute a part of the description. Together with the embodiments of the present disclosure, the accompanying drawings are used to explain the technical solution of the present disclosure and do not constitute a limitation on the technical solution of the present disclosure.

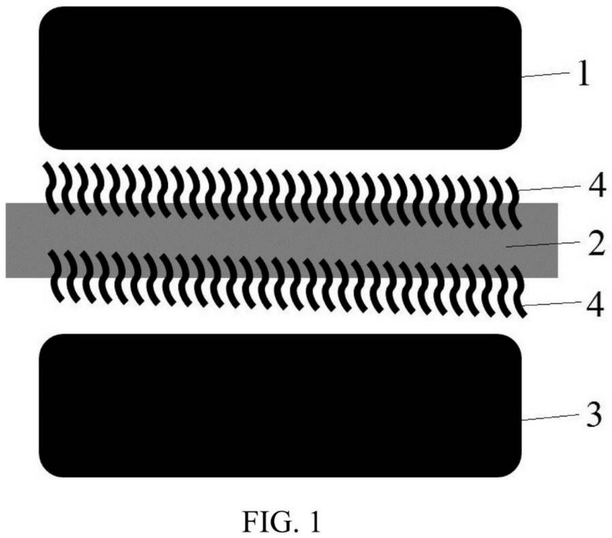

FIG. 1 is a schematic diagram of bipolar plates in Examples 1 and 2 of the present disclosure.
FIG. 2 is a physical image of bipolar plate samples in Examples 1 and 2 of the present disclosure.
FIG. 3 is a schematic diagram of a vertically placed bipolar plate according to Example 2 of the present disclosure. It can be seen from the figure that the vertically placed carbon felts did not fall off, indicating that the friction between the carbon felts and the bipolar plate is extremely large.
FIG. 4 is a diagram showing the efficiency and resistance of a stack after bipolar plates are stacked according to Example 1 of the present disclosure.
FIG. 5 is a diagram showing the efficiency and resistance of a stack after bipolar plates are stacked according to Example 2 of the present disclosure.

Reference numerals: 1. first carbon felt; 2. bipolar plate; 3. second carbon felt; 4. carbon fibers inserted into grooves of the bipolar plate containing an adhesive.

### DETAILED DESCRIPTION

In order to make the objectives, technical solutions, and advantages of the present disclosure more clear, embodiments of the present disclosure are described in detail below. It should be noted that the embodiments and the features in the embodiments of the present disclosure may be arbitrarily combined with each other without conflicts.

### Example 1

Surfaces of a bipolar plate were treated: The bipolar plate surfaces were rolled, with a roller spacing set to 6 mm. After rolling, the bipolar plate was placed on a vacuum adsorption table and cleaned with anhydrous ethanol. Laser was used to etch the front and back sides of the bipolar plate longitudinally (i.e., to etch grooves perpendicular to a flow direction of an electrolyte) to construct grooves on the surfaces of the bipolar plate. The inner diameter width of the grooves was 10 µm and the etching depth was 50 µm. The spacing of the grooves was 20 µm. The laser etching process required the front and back sides of a pole piece to be aligned, which were then longitudinally etched simultaneously, achieving high etching efficiency. Furthermore, etching positions on the front and back sides of the bipolar plate were the same, avoiding bending of the bipolar plate due to uneven tension on the front and back sides. During the laser etching process, an etched region of the pole piece was vacuumed and dedusted to ensure that dust on the surface of the pole piece was qualified. The bipolar plate was immersed into anhydrous ethanol for 20 minutes, and then taken out and placed in a vacuum drying oven to perform vacuum drying at 140°C for 12 hours. The adhesive was coated on the surfaces of the bipolar plate where the grooves had been prepared; a scraper was used to remove the adhesive on the surfaces of the bipolar plate, while the adhesive in the grooves was retained. On the bipolar plate containing the adhesive in the grooves, a carbon fiber precursor was caused to fly upward vertically in a flocking room by static electricity, and was inertially inserted into the grooves of the bipolar plate to complete flocking. The DC voltage of a flocking plate was 20 KV, the distance between the two plates was 5 cm, the polyacrylonitrile (PAN)-based carbon fiber precursor had a diameter of 5 µm, a length of 0.5 mm, and an implantation depth of 20µm, and the temperature of the flocking room was 500°C; the flocked bipolar plate was placed under vacuum and naturally cooled to room temperature. The weight of the fibers accounted for 1% of the final weight of the bipolar plate.

The bipolar plate electrode prepared in this example was applied to an all-vanadium flow battery to form a small stack by connecting two flow batteries in series.

The integrated electrode was tested for resistance according to the energy industry standard of the People's Republic of China "NB/T 42007-2013 Test Method for Bipolar Plates for All-vanadium flow Batteries". A resistance meter was a TE100A-model loop resistance meter from Wuhan Teshite Technology Co., Ltd. As can be seen from Table 1, the electrode contact resistance was significantly reduced compared to the Comparative Example.

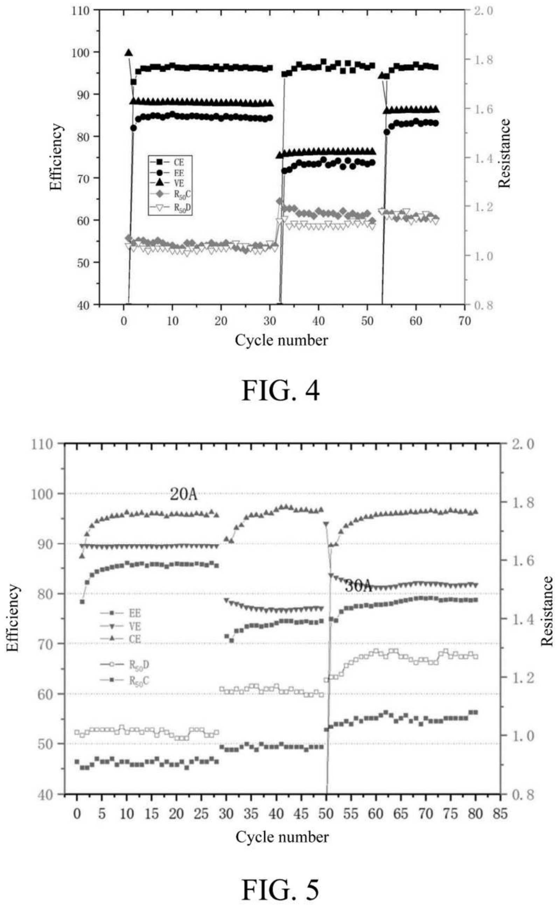

A charging and discharging strategy of constant current and constant voltage charging and constant current discharging was used, with a current density of 80 mA/cm², a constant voltage potential of 3.1 V, a charging and discharging OCV range of 1.322 V to 1.48 V, and a test instrument of Blue Electric charging and discharging instrument. As can be seen from FIG. 4, the voltage efficiency was basically maintained at 89% or more.

In this example, an ion exchange membrane NR212 was purchased from DuPont. In this example, the electrode carbon felt was purchased from Sichuan Jiangyou Runsheng Graphite Felt Co., Ltd., with a grade of 4.2 mm. In this example, the bipolar plate was purchased from Weihai Nanhai Carbon Materials Co., Ltd., with a grade of 0.6 mm. In this example, the adhesive was the flocking adhesive prepared in Example 1 of Chinese patent CN 112756795 A. The present disclosure does not limit the type of the flocking adhesive, and other types of flocking adhesives might also achieve similar effects to those in Example 1.

### Example 2

The only difference between this example and Example 1 is that the spacing of the grooves was 10 µm. The other processes and raw materials were exactly the same as those in Example 1. The weight of the carbon fibers in Example 2 accounted for 1% of the final weight of the bipolar plate.

The bipolar plate electrode prepared in this example was applied to an all-vanadium flow battery to form a small stack by connecting two flow batteries in series. Components used in the all-vanadium flow battery were the same as those in Example 1.

The integrated electrode was subjected to a resistance test according to the energy industry standard of the People's Republic of China, "NB/T 42007-2013 Test Method for Bipolar Plates for All-vanadium flow Batteries". The resistance meter was a TE100A-model loop resistance meter from Wuhan Teshite Technology Co., Ltd. As can be seen from Table 1, the electrode contact resistance was significantly reduced compared to the Comparative Example.

A charging and discharging strategy of constant current and constant voltage charging and constant current discharging was used, with a current density of 80 mA/cm², a constant voltage potential of 3.1 V, a charging and discharging OCV range of 1.322 V to 1.48 V, and a test instrument of Blue Electric charging and discharging instrument. As can be seen from FIG. 5, the voltage efficiency was basically maintained at 88% or more.

### Comparative Example 1

The only difference between Comparative Example 1 and Example 1 was that no carbon fiber precursor was implanted, and the other processes were exactly the same as those of Example 1.

### Comparative Example 2

The only difference between Comparative Example 2 and Example 1 was that no adhesive was used, and the other processes were exactly the same as those of Example 1.

### Comparative Example 3

The difference between Comparative Example 3 and Example 1 was that no groove was provided, an adhesive layer was coated on the surfaces of the bipolar plate, and the thickness of the adhesive layer was 0.1 mm and the coating amount was 100 g/m². The other processes were exactly the same as those of Example 1.

**Table 1: Statistical table of electrical properties of examples and comparative examples**

| Comparison Items | Example 1 | Example 2 | Comparative Example 1 | Comparative Example 2 | Comparative Example 3 |
|---|---|---|---|---|---|
| Ion exchange membrane | 50 µm; NR212 | 50 µm; NR212 | 50 µm; NR212 | 50 µm; NR212 | 50 µm; NR212 |
| Electrode | 4.2 mm carbon felt | 4.2 mm carbon felt | 4.2 mm carbon felt | 4.2 mm carbon felt | 4.2 mm carbon felt |
| Bipolar plate | PVDF-based bipolar plate | PVDF-based bipolar plate | PVDF-based bipolar plate | PVDF-based bipolar plate | PVDF-based bipolar plate |
| Contact resistance | 820 µΩ | 702 µΩ | 1212 µΩ | 1076 µΩ | 1105 µΩ |
| Battery compression ratio | 20% | 20% | 20% | 20% | 20% |
| Current density | 80 mA/cm² | 80 mA/cm² | 80 mA/cm² | 80 mA/cm² | 80 mA/cm² |
| Initial coulombic efficiency | 96.5% | 96.6% | 96.4% | 96.4% | 96.5% |
| Initial voltage efficiency | 88.5% | 89.6% | 86.5% | 86.3% | 87.5% |
| Initial energy efficiency | 85.4% | 86.5% | 83.4% | 83.2% | 84.5 |
| Coulombic efficiency after 1000 cycles | 93.5% | 93.6% | 93.2% | 92.9% | 93.4% |
| Voltage efficiency after 1000 cycles | 87.6% | 89.2% | 86% | 85.5% | 85.75 |
| Energy efficiency after 1000 cycles | 81.5% | 83.5% | 79.9% | 79.5% | 80.1% |

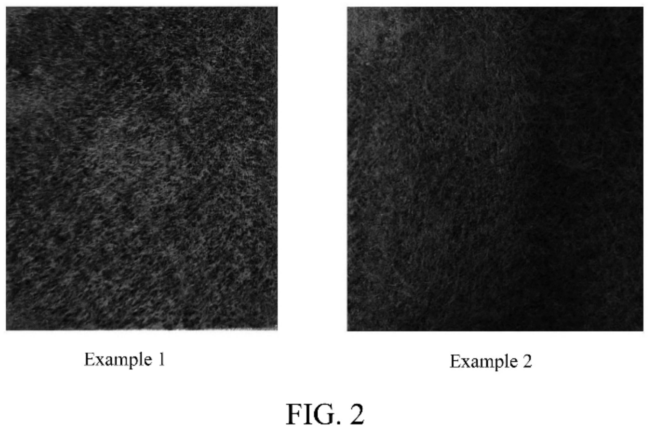

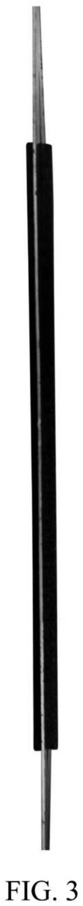

It can be seen from Table 1 that the bipolar plates provided with the grooves, the adhesive, and the fibers at the same time had excellent electrical properties. It can be seen from FIG. 2 and FIG. 3 of the present disclosure that the carbon fiber flock layers were formed on the surfaces of the bipolar plate after flocking. The carbon fiber layers served as the contact surface with the carbon felts, which significantly increased the friction therebetween. After 5,000 cycles of charge and discharge in the stack, the carbon felts did not slip or shift, thereby improving the safety and stability in the operation of the stack.

## Claims

1. A bipolar plate for a flow battery, **characterized in that** the flow battery comprises a first carbon felt, a second carbon felt, and a bipolar plate, and the bipolar plate is located between the first carbon felt and the second carbon felt;
surfaces of the bipolar plate in contact with the first carbon felt and the second carbon felt are provided with grooves, the grooves are filled with an adhesive, and fibers extending out of the grooves are provided in the grooves.

2. The bipolar plate according to claim 1, wherein the width of the grooves is 1 µm to 100 µm;
the depth of the grooves is 10 µm to 100 µm;
the spacing between adjacent grooves on the surface of one side of the bipolar plate is 1 µm to 100 µm.

3. The bipolar plate according to claim 1, wherein the diameter of the fibers is 1 µm to 100 µm, and the length of the fibers is 0.1 mm to 0.5 mm.

4. The bipolar plate according to claim 1, wherein the fibers are implanted into the grooves to a depth of 10 µm to 100 µm.

5. The bipolar plate according to claim 1, wherein an angle between the grooves and an electrolyte flow direction of the flow battery is within a range of 30° to 90°.

6. The bipolar plate according to claim 1, wherein the material of the fibers is independently selected from any one or more of a polyacrylonitrile-based carbon fiber, an asphalt-based carbon fiber, a viscose-based carbon fiber, and/or a phenolic-based carbon fiber;
the weight of the fibers accounts for 1% to 5% of the final weight of the bipolar plate.

7. The bipolar plate according to claim 1, wherein the adhesive is selected from any one or more of a polyurethane flocking adhesive and/or an acrylic flocking adhesive.

8. The bipolar plate according to claim 1, wherein the flow battery is selected from any one or more of an all-vanadium flow battery, an iron-chromium flow battery, a zinc-iron flow battery, and/or a zinc-bromine flow battery.

9. A method for preparing the bipolar plate according to claim 1, **characterized in that** the preparation method comprises:
preparing the grooves on the surfaces of the bipolar plate in contact with the first carbon felt and the second carbon felt;
coating the adhesive on the surfaces of the bipolar plate where the grooves have been prepared;
removing the adhesive on the surfaces of the bipolar plate, while retaining the adhesive in the grooves;
implanting the fibers into the grooves before the adhesive is cured, to obtain the bipolar plate.

10. A flow battery, **characterized in that** the flow battery comprises the bipolar plate according to claim 1;
the flow battery is selected from any one or more of an all-vanadium flow battery, an iron-chromium flow battery, a zinc-iron flow battery, and/or a zinc-bromine flow battery.
